## Europäisches Patentamt
## European Patent Office
## Office européen des brevets

(19)

(11) Veröffentlichungsnummer : **0 122 456**
**B1**

(12)

# EUROPÄISCHE PATENTSCHRIFT

(45) Veröffentlichungstag der Patentschrift :
**16.06.87**

(21) Anmeldenummer : **84102722.0**

(22) Anmeldetag : **13.03.84**

(51) Int. Cl.⁴ : **G 03 B 27/32**, G 03 F   1/04

(54) **Verfahren und Vorrichtung zum Bestimmen des Bildausschnitts von Vorlagen für die Reproduktion in der Drucktechnik.**

(30) Priorität : **19.04.83 DE 3314116**

(43) Veröffentlichungstag der Anmeldung :
**24.10.84 Patentblatt 84/43**

(45) Bekanntmachung des Hinweises auf die Patenterteilung : **16.06.87 Patentblatt 87/25**

(84) Benannte Vertragsstaaten :
**AT BE CH DE FR GB IT LI NL**

(56) Entgegenhaltungen :
**US-A- 4 082 452**
**US-A- 4 128 331**
**US-A- 4 270 173**
**Patent Abstracts of Japan Band 6, Nr. 88, 26 Mai 1982**
**Patent Abstracts of Japan Band 5, Nr. 177, 13 November 1981**
**Patent Abstracts of Japan Band 4, Nr. 107, 31 Juli 1980 Seite 61P21**
**Patent Abstracts of Japan Band 4, Nr. 86, 20 Juni 1980 Seite 134P16**

(73) Patentinhaber : **DR.-ING. RUDOLF HELL GmbH**
**Grenzstrasse 1-5**
**D-2300 Kiel 14 (DE)**

(72) Erfinder : **Mühlenbruch, Dieter**
**Am See 2**
**D-2317 Stoltenberg (DE)**

## Beschreibung

Die vorliegende Erfindung betrifft ein Verfahren zur Bestimmung von Bildausschnitt und Maßstab von Vorlagen für die Reproduktion mittels optoelektrischer Vorlagenabtastung, wobei vor der eigentlichen Vorlagenabtastung die Vorlage in einem Vorlagenhalter montiert, der Vorlagenhalter in den Projektionskopf eines Geräts zur Ermittlung von Bildausschnitt und Maßstab eingebracht, die Vorlage auf einen Projektionstisch projiziert und durch Einstellung der Projektions-Vergrößerung mit einem auf dem Projektionstisch befindlichen Layoutbild zur Deckung gebracht wird.

In der Drucktechnik besteht bei der Herstellung von Farbauszügen mittels sogenannter Scanner, d. h. Geräten zur Farbauszugsherstellung durch fotoelektrische Vorlagenabtastung, die Forderung nach einer genaueren Bestimmung des gewünschten Maßstabs für die Reproduktion. Hierzu sind Vergrößerungsgeräte bekannt, mit denen vor der eigentlichen Vorlagenabtastung die Vergrößerung oder Verkleinerung gemessen wird, indem ein Farbdia, das abgetastet werden soll, mittels einer Lichtquelle auf einen Projektionstisch projiziert wird. Am Projektionstisch ist seitlich ein senkrechter Balken vorgesehen, der einen motorisch auf- und abfahrbaren Projektionskopf trägt. Je nach Stellung des Projektionskopfes kann der gewünschte Maßstab eingestellt und abgelesen werden.

Es ist weiterhin in « Patent Abstracts of Japan » — JP-A-57-24943 ein Gerät beschrieben, bei dem ein Original in eine Hilfsvorrichtung eingeklebt, mit einer transparenten Platte abgedeckt und mittels eines Montagerahmens in eine Haltevorrichtung eines Vergrößerungsprojektors geschoben wird. Das Original wird dann auf ein auf dem Projektionstisch befindliches Layoutpapier projiziert und durch Einstellen der Vergrößerung des Projektors und durch Verschiebung des Layoutpapiers mit dem Layout zur Deckung gebracht. Anschließend wird das Original mit der Hilfsvorrichtung aus dem Projektionskopf herausgenommen und auf das Layout gelegt, worauf dann der eigentliche Bildausschnitt mit Hilfe eines Digitizers und eines komplizierten Systems von Referenzpunkten durch Berechnung über den Maßstab ermittelt wird. Die Winkellage für die eigentliche Abtastung auf dem Scanner wird dann mit Hilfe der Lineale auf der Hilfsvorrichtung markiert.

In der Praxis hat es sich aber gezeigt, daß die Bedienung solcher Geräte umständlich und zeitraubend ist und daß die erzielte Genauigkeit sehr stark vom Geschick des Bedieners abhängt. Der vorliegenden Erfindung liegt daher die Aufgabe zugrunde, ein Verfahren und ein verbessertes Gerät zur Bestimmung des Bildausschnitts und des Maßstabs für die Reproduktion zu schaffen wobei eine einfachere Bedienung gegeben und eine exaktere Bestimmung des Bildausschnitts und des Maßstabs möglich ist.

Die Erfindung erreicht dies durch die im kennzeichnenden Teil des Anspruchs 1 angegebenen Merkmale. Vorteilhafte Weiterbildungen sind in den Unteransprüchen 2 bis 7 angegeben.

Die Erfindung wird im folgenden anhand der Figuren 1 bis 3 näher erläutert. Es zeigen

Figur 1 eine perspektivische Seitenansicht des Gerätes,

Figur 2 eine perspektivische Seitenansicht des Projektionskopfes mit ausgefahrenem Vorlagenhalter und

Figur 3 eine Draufsicht auf den Vorlagenhalter.

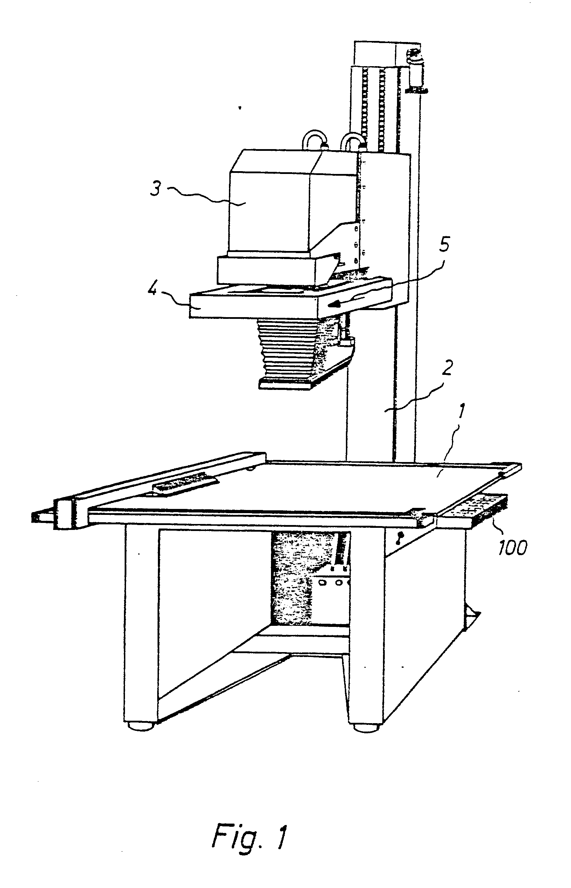

Figur 1 zeigt einen Projektionstisch 1, an dem seitlich ein senkrechter Balken 2 angeordnet ist, an dem ein Projektionskopf 3 senkrecht auf- und abfahrbar ist. Der Projektionskopf 3 enthält einen Vorlagenhalter 4, der in Pfeilrichtung 5 aus dem Projektionskopf 3 schubladenartig herausgezogen werden kann. Die Mittel zur Führung des Vorlagenhalters sind im einzelnen nicht dargestellt, da solche Führungsmittel, z. B. Schienen oder dergleichen, hinlänglich bekannt sind. Seitlich am Tisch 1 ist eine Bedienungstastatur 100 angeordnet.

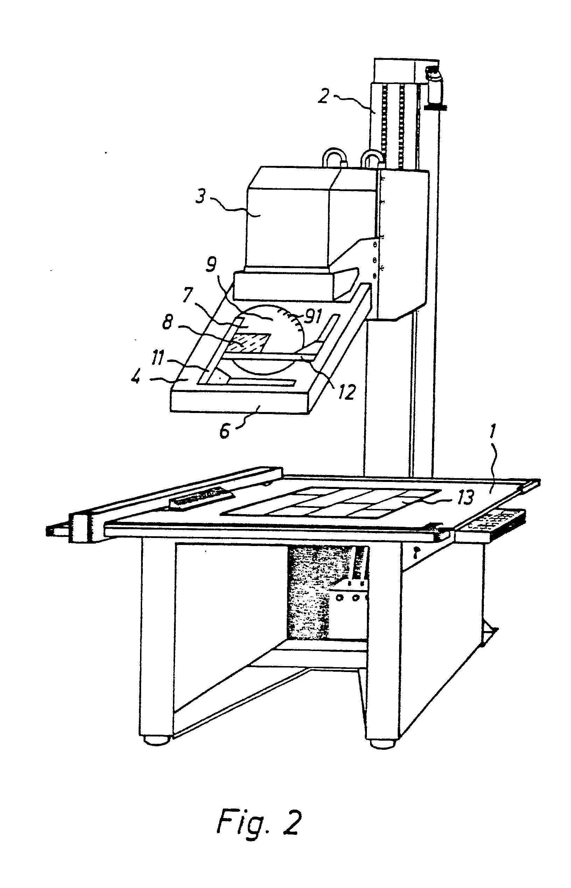

Figur 2 zeigt den Vorlagenhalter 4 in seiner Arbeitslage. Er besteht aus einem Rahmen 6, der in seinem Innern die eigentliche Aufnahme 7 für die Vorlage 8 enthält. Im Beispiel der Figur 2 besteht die Aufnahme für die Vorlage aus einer runden Scheibe 9, welche eine Skala 91 aufweist. Außerdem sind verschiebbare Ausschnittlineale 11 und 12 vorgesehen, mittels der der exakte Ausschnitt bestimmt wird. Sowohl die Lineale 11 und 12 als auch der eigentliche Vorlagenhalter können motorisch bewegt werden.

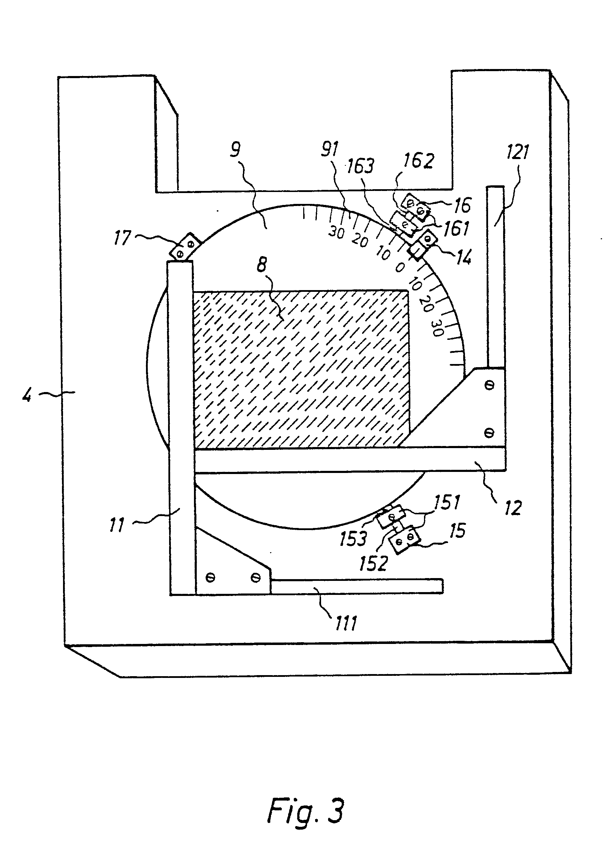

Figur 3 zeigt eine Draufsicht auf den Vorlagenhalter 4. Die Lineale 11 und 12, welche hochgeklappt werden können, sind in Schienen 111 und 121 verschiebbar angeordnet. Die Vorlage 8 ist mit ihrer Aufnahme 9 unter den Linealen 11 und 12 verdrehbar. Die Aufnahme 9 besteht aus einer kreisförmigen Scheibe, die am Außenrand eine Winkelskala 91 aufweist, wobei die Nullstellung anhand einer Marke 14 abgelesen werden kann. Die Scheibe 9 ist innerhalb von Anschlägen 15, 16 und 17 gehalten, wobei die Anschläge 15 und 16 jeweils aus einem ortsfesten Teil 151 und 161 und einem federnden Teil 152 und 162 bestehen, die jeweils eine Rolle 153 und 163 aufweisen, welche gegen die Scheibe 9 drücken. Die Scheibe 9 kann von der aus Fig. 1 ersichtlichen Bedienungstastatur über einen im Vorlagenhalter vorgesehenen Motorantrieb in jede gewünschte Winkellage verdreht werden. Die Lineale 11 und 12 können ebenfalls vom Bedienungsfeld 100 aus elektrisch verfahren werden, wozu im Vorlagenhalter 4 entsprechende Stellmotoren vorgesehen sind.

Der Ablauf des Verfahrens ist wie folgt : Eine Vorlage, z. B. ein Farbdia, wird in eine Maske eingeklebt und in die Aufnahme 7 eingehängt.

Auf dem Projektionstisch 1 ist ein Layout-Bild 13 montiert, und mit Hilfe des Vergrößerers, d. h. mit Hilfe der Einstellung der Entfernung des Projektionskopfes vom Projektionstisch, was mit der Bedienungstastatur 100 erfolgt, wird das Originalbild mit dem Layout-Bild 13 in Deckung gebracht, wobei der hierzu erforderliche Maßstab direkt am Gerät abgelesen werden kann. Mittels der elektrisch gesteuerten Ausschnittlineale 11 und 12 und der Winkelführung, Scheibe 9, Skala 91, ist eine schnelle und exakte Ausschnittsbestimmung möglich. Der Startpunkt und die Winkellage werden auf der Maske oder auf dem Dia gekennzeichnet. Nachdem die Einstellung erfolgt ist, wird die komplette Diamaske mit den Markierungen auf die Referenzlinie der Farbscannerabtastwalze montiert. Alle diese Funktionen des Gerätes werden präzise motorisch gelenkt : die Verstellung des Projektionskopfes 3, die Bewegung der Ausschnittlineale 11 und 12 und die Winkeldrehung der Scheibe 9. Der Projektionskopf 3 fährt mit dem klappbaren Diahalter nach jedem Arbeitsgang motorisch in die in Figur 2 gezeigte bequeme Arbeitslage des Bedieners zurück. Weiterhin weist das Gerät eine elektronische Scharfeinstellung auf. Eine Belichtungszeituhr kann für schnelle Layout-Gestaltung in vorteilhafter Weise zusätzlich vorgesehen sein. Vorteil dieses Gerätes ist eine Zeitersparnis beim Festlegen des Reproduktionsmaßstabes sowie des Bildausschnitts und der exakten Auswinkelung sowie eine bequeme Handhabung.

## Patentansprüche

1. Verfahren zur Bestimmung von Bildausschnitt und Maßstab von Vorlagen für die Reproduktion mittels optoelektrischer Vorlagenabtastung, wobei vor der eigentlichen Vorlagenabtastung die Vorlage in einem Vorlagenhalter montiert, der Vorlagenhalter in den Projektionskopf eines Geräts zur Ermittlung von Bildausschnitt und Maßstab eingebracht, die Vorlage auf einen Projektionstisch projiziert und durch Einstellung der Projektionsvergrößerung mit einem auf dem Projektionstisch befindlichen Layoutbild zur Deckung gebracht wird, dadurch gekennzeichnet, daß die exakte Winkellage der Vorlage in bezug auf das Layoutbild durch Verdrehen der Vorlage innerhalb des Projektionskopfes eingestellt und daß der exakte Bildausschnitt in bezug auf das Layout ebenfalls im Projektionskopf durch bewegliche Ausschnittlineale eingestellt wird.

2. Verfahren nach Anspruch 1, dadurch gekennzeichnet, daß der Vorlagenhalter mit der montierten Vorlage vor Einstellung der Ausschnittlineale in die bei der Reproduktion gewünschte Soll-Lage gedreht wird.

3. Verfahren nach Anspruch 1 oder 2, dadurch gekennzeichnet, daß zusätzlich mittels Skalen, welche seitlich der Vorlage angeordnet sind, die Schnittpunkte der Ausschnittlineale mit den Skalen ermittelt werden.

4. Vorrichtung zur Durchführung des Verfahrens nach einem der Ansprüche 1 bis 3 mit einem Projektionstisch, einem seitlich am Projektionstisch senkrecht angeordneten Balken und einem an den Balken auf- und abfahrbaren Projektionskopf, an dem ein Vorlagenhalter angeordnet ist, dadurch gekennzeichnet, daß der Vorlagenhalter (4) aus einem Rahmen besteht, der eine aus durchsichtigem Material bestehende verdrehbare Aufnahme (7) für die Vorlage (8) sowie bewegliche Auschnittlineale (11, 12) aufweist, daß der Rahmen (4) schubladenartig aus dem Projektionskopf (3) herausziehbar ist, daß der Rahmen (4) in der ausgezogenen Position an der Seite, die dem Projektionskopf (3) zugewandt ist, an diesem drehbar angelenkt und daß der Rahmen (4) in seiner ausgezogenen Endposition an seiner Anlenkung am Projektionskopf schräg nach unten gegen einen Anschlag kippbar ist.

5. Vorrichtung nach Anspruch 4, dadurch gekennzeichnet, daß die Aufnahme (7) für die Vorlage (8) innerhalb des Rahmens motorisch verdrehbar ist.

6. Vorrichtung nach Anspruch 5, dadurch gekennzeichnet, daß die Aufnahme (7) für die Vorlage (8) aus einer runden Scheibe mit Gradeinteilung besteht.

7. Vorrichtung nach einem der Ansprüche 4 bis 6, dadurch gekennzeichnet, daß die Ausschnittlineale (11, 12) elektrisch steuerbar sind.

## Claims

1. Method for determination of image cropping and scale of originals for reproduction by optoelectronic original scanning wherein, prior to the actual original scanning operation, the original is placed in an original holder, the original holder is placed in the projection head of an apparatus for determination of image cropping and scale and the original is projected on to a projection table and placed in coincidence with a layout image situated on the projection table setting the projection enlargement, characterized in that the precise angular position of the original with respect to the layout image is set by rotary displacement of the original within the projection head and that the precise image cropping is equally adjusted with respect to the layout, within the projection head by means of displaceable cropping rulers.

2. Method according to claim 1, characterized in that the original holder or mount is turned together with the mounted original prior to the adjustment of the cropping rulers, into the required position required during reproduction.

3. Method according to claim 1 or 2, characterized in that the points of intersection of the cropping rulers with the scales are complementarily determined by means of scales which are laterally arranged with respect to the original.

4. Device for application of the method according to one of the claims 1 to 3, comprising a projection table, a vertical post arranged adjacent the projection table and a projection head on which is situated an original holder or mount and which may be displaced upwards and downwards on the post, characterized in that the original holder (4) consists of a frame which comprises a rotatable mount (7) for the original (8) and consisting of transparent material, as well a movable cropping rulers (11, 12), that the frame (4) may be pulled out of the projection head (3) in the manner of a drawer, that the frame (4) in the pulled-out position is pivotally articulated to the projection head on the side adjoining the head and that the frame (4) may in its pulled out end position be tilted about its connection to the projection head, obliquely downwards against a stop.

5. Device according to claim 4, characterized in that the mount (7) for the original (8) may be turned within the frame by means of a motor.

6. Device according to claim 5, characterized in that the mount (7) for the original (8) comprises a round plate bearing a graduate scale.

7. Device according to one of the claims 4 to 6, characterized in that the cropping rulers (11, 12) may be controlled electrically.

## Revendications

1. Procédé pour déterminer le cadrage et l'échelle de modèles pour la reproduction au moyen d'un balayage opto-électrique des modèles, procédé dans lequel avant le balayage proprement dit du modèle, ce modèle est monté dans un support de modèle, le support de modèle est introduit dans la tête de projection d'un appareil permettant de déterminer le cadrage et l'échelle, le modèle est projeté sur une table de projection et par réglage du grossissement de projection, il est amené en coïncidence avec une image de maquette se trouvant sur la table de projection, procédé caractérisé en ce que la position angulaire exacte du modèle par rapport à l'image de maquette, est réglé par rotation du modèle à l'intérieur de la tête de projection, et que le cadrage exact par rapport à la maquette, est également réglé dans la tête de projection à l'aide de règles de cadrage mobiles.

2. Procédé selon la revendication 1, caractérisé en ce que le support de modèle, avec le modèle qui y est monté, est amené avant réglage des règles de cadrage dans la position théorique souhaitée pour la reproduction.

3. Procédé selon la revendication 1 ou 2, caractérisé en ce qu'en outre, au moyen de graduations, disposées latéralement par rapport au modèle, on détermine les points d'intersection des règles de cadrage avec ces graduations.

4. Dispositif pour la mise en œuvre du procédé selon l'une des revendications 1 à 3, dispositif comportant une table de projection, une poutre disposée sur le côté perpendiculairement à la table de projection, et une tête de projection susceptible de se déplacer vers le haut et vers le bas sur la poutre, et sur laquelle est disposé un support de modèle, dispositif caractérisé en ce que le support de modèle (4) est constitué par un cadre qui comporte un logement rotatif (7), constitué d'un matériau transparent pour le modèle (8) ainsi que des règles mobiles de cadrage (11, 12), le cadre (4) étant susceptible d'être tiré à la façon d'un tiroir hors de la tête de projection (3), ce cadre (4), lorsqu'il est tiré, étant articulé à la tête de projection (3) sur son côté en regard de cette tête, et ce cadre (4), lorsqu'il est tiré, étant susceptible de basculer obliquement vers le bas contre une butée, grâce à son articulation sur la tête de projection.

5. Dispositif selon la revendication 4, caractérisé en ce que le logement (7) pour le modèle (8) est susceptible de tourner à l'intérieur du cadre sous l'action d'un moteur.

6. Dispositif selon la revendication 5, caractérisé en ce que le logement (7) pour le modèle (8) est constitué par un disque rond comportant une échelle en grades.

7. Dispositif selon une des revendications 4 à 6, caractérisé en ce que les règles de cadrage (11, 12) sont susceptibles d'être commandées électriquement.

**Fig. 1**

Fig. 2

*Fig. 3*